# EUROPEAN PATENT SPECIFICATION

(11) **EP 0 783 742 B1**
(45) Date of publication and mention of the grant of the patent: **12.05.1999**
(21) Application number: 94924987.4
(22) Date of filing: 10.08.1994
(51) Int. Cl.: G07F 7/10, G07F 7/08, G07C 9/00

(54) **CREDIT DOCUMENT CONNECTED TO A DOCUMENT OR CUSTOMISED CARD, INDEPENDENT CUSTOMISED CREDIT CARD AND ASSOCIATED ISSUANCE AND VALIDATION EQUIPMENT**
MIT EINEM DOKUMENT ODER EINER KUNDENSPEZIFIZIERTEN KARTE VERBUNDENES KREDITDOKUMENT, UNABHÄNGIGE KUNDENSPEZIFIZIERTE KREDITKARTE UND ZUGEHÖRIGE AUSGABE- UND PRÜFAPPARATUR
DOCUMENT DE CREDIT ASSOCIE A UNE CARTE OU A UN DOCUMENT PERSONNALISE, CARTE DE CREDIT INDEPENDANTE PERSONNALISEE ET EQUIPEMENT D'EMISSION ET DE VALIDATION ADAPTE

(43) Date of publication of application: 16.07.1997
(73) Proprietor: NADIR TECHNOLOGY COMPANY LIMITED, Dublin 2 (IE)
(72) Inventor: BOZZO, Ferdinando, Salzburg (AT)
(74) Representative: Lecce, Giovanni
(86) International application number: PCT/IT94/00135
(87) International publication number: WO 96/05576

(56) References cited:
- EP-A- 0 097 110
- EP-A- 0 504 616
- EP-A- 0 590 224
- WO-A-86/06527
- FR-A- 2 133 941
- FR-A- 2 441 222
- GB-A- 2 035 642
- GB-A- 2 256 170
- US-A- 4 016 404
- US-A- 4 948 174

## Description

### Technical Field

The present invention relates to a credit document connected to a customised document or care, to an indipendent customised credit care, and to the related equipment for issuance and validation.

Specifically the present invention relates to a credit document for provision of a payment system having characteristics of absolute safety, and to the equipment which allows issuance, control and validation of the credit document and of the complementary identification document and a traditional credit card customised and validated by the above mentioned equipment.

### Background Art

As known there exist various instruments for the settlement of commercial exchanges or the transfer of goods and services between one individual and another.

In addition to legal tender, used in general for negotiations of small amount, there are used credit documents, e.g. bank and bankers cheques, whose function is to limit the risks connected with circulation of said credits.

Another instrument always more widespread and which allows making payments consists of credit cards consisting of non-transferrable documents which authorised the holder to purchase goods and services from third parties approved by the issuer of the card, in general banks and financial organisations, to which is transferred the onus of payment. The payment instruments alternative to cash avoid the user's holding available an amount of money, sometimes large, with the related risks. Even these instruments are not considered quite safe. The credit cards can be readily used by third parties at least up to the time of reporting of their robbery or loss, while cheques, despite numerous provisions adopted, are skilfully counterfeited and falsified. Given the large number of payment operations performed each day it is understandable how these problems are perceived in a very serious manner, considering that the involve simultaneously numerous categories, i.e. the customers, credit organisations, and the authorities responsible for control and repression.

EP-A-0 590 224 discloses a credit document including the features defined in the preamble of claim 1.

### Disclosure of Invention

The object of the present invention is thus to obviate the shortcomings set forth above.

Specifically the object of the present invention is to provide a payment means in the form of a credit document extremely safe, useable only by the person to whom issued on the basis of a customised document. Another object of the present invention is to achieve the same guarantee concerning safety for the widespread credit cards.

A further object of the present invention is to provide the specific equipment for creation of the credit documents and related customised document, of the independently costomised credit card, and control and validation thereof.

According to the present invention, these and other object are achieved by a credit document connectable to a customised document or card or independent customised credit card including a microchip, said credit document comprising a watermarked paper support with copper-plate engraving print provided with a biometric code related to a fingerprint of one or more fingers of a regular owner of the credit document, wherein the credit document is provided with at least one safety code referred to the transaction data and expressed in two fields on the basis of a key consisting of an individual (personal) identification code, and in that the microchip of the customised document or card or independent customised credit card is provided with the personal identification code in form of an alphanumeric sequence and with at least one mathematical expression which transcodifies parameters associated with the fingerprint or fingerprints on the credit document.

The constructive and functional characteristics of the credit document connected to a document or customised card and of the independently customised credit card which is the object of the present invention as well as the associated formation, control and validation equipment for said document are set forth in the description of a preferred embodiment thereof given below by way of non-limiting example with reference to the annexed drawings in which:
FIG. 1 shows schematically an example of a configuration of the paper support forming the credit document which is the object of the present invention,
FIG. 2 shows a block diagram of the equipment for creation of the identification document connected to the credit document,
FIG. 3 shows a block diagram of the equipment for issuance of the credit document on the basis of the identification document,
FIG. 4 shows a block diagram of the equipment designed to validate the credit document,
FIG. 5 shows the flow diagram of the payment system stating from creation of the identification document.

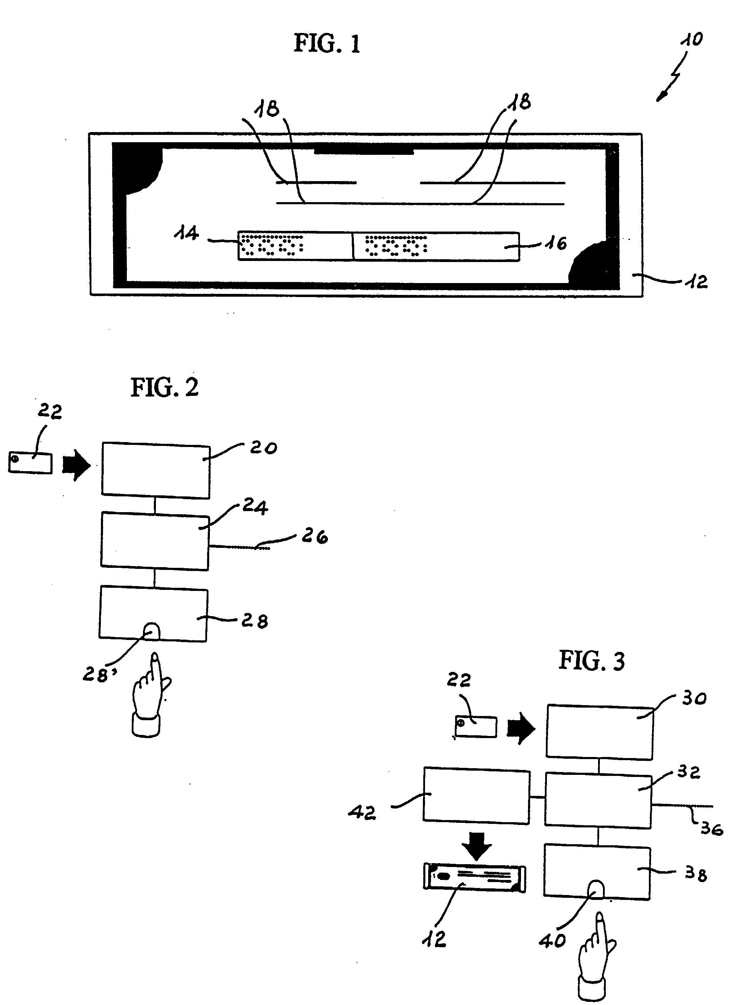

With reference to the figures the paper support forming the credit document which is the object of the present invention indicated by 10 in Fig. 1 is made up of a strip of watermarked paper 12 having preferably the same size as the traditional bank cheques and on which are achieved two fields 14, 16 for application of the safety code of the type with dots and hence not interpretable on sight. The device provided in the field 14 comprises e.g. the date of issuance of the document, the issuer's code (bank of financial institution) and the amount of the title. The same data are shown in field 16 expressed in cryptographic form by means of a key consisting of an individual code and as such associated univocally with the owner of the document. Said individual code is preferably made up of an alphanumerical sequence.

The paper support 10 achieved with copper-plate engraving comprises also one or more print relieves formed along predetermined areas of the strip 12 and detectable by means of sensors integrated in the validation equipment discussed below. Some parts immediately detectable on sight of the paper support 10, forming the credit document, are indicated to identify the issuing bank or instituite, the amount of the credit document and its serial number, payment order, etc. Application of the safety code on the credit document for issuance to the customer requesting it is subject to possession of a special customised document per in the form of a card. Said card constitutes an integral part of the document and allows first issuance with the safety code and furthermore subsequent validation upon use. The personal card, advantageously proposed in the form of an electronic smart card having the same size as the wide spread credit cards, incorporates a microchip on which is memorised, the procedure and device specified below, the individual code in the form of an alphanumerical sequence as well as a univocal personal characteristic of the user or applicant. Said personal characteristic in accordance with the present invention consists of a mathematical expression which transcodifies the parameters associated with the fingerprint of one or more fingers of the user or applicant. The fingerprint as known is defined by the projections of the skin which give rise to figures which do not change with the time for the same person. This peculiar aspect then gives rise to a univocal personal characteristic adopted here without creation of centralised fingerprint files by means of transcodification in a mathematical expression of the fingerprint taken as concerns reading at a number of points sufficient to avoid interpretative doubts. Said taking, indicatively and not critically between 150,000 and 250,000 points, is performed by a special transparency, diagrammed in Fig. 2, with which the card in question is customised.

The above mentioned device comprises a reader-codifier 20 for the card 22, a control unit 24 connected by means of line 26 to the bank information system and a scanner 28 designed for reading the fingerprint or fingerprints of the customer which are memorised after coding in the microprocessor integrated in the card 22.

The scanner 28 is provided with a seat appropriately formed and sized 28' on which the applicant places the finger or fingers for taking the fingerprint to be coded and memorised in the microprocessor. The latter contains also the key for transcodifying the code with points present in cryptographic form in field 16 of the strip 12 forming the paper support of the paper support 10.

Said key or individual code consisting of an alphanumerical sequence univocally associated with each card holder, is generated by the issuer information system, e.g. the bank, and send to the device of customisation of the card 22, discussed below, through the line 26 of the device diagrammed in Fig. 2.

The card 22 containing the individual alphanumerical code and the mathematical expression associated with the fingerprint or fingerprints constitutes the basic document for arranging, by the issuing organisation, the credit document on request of the customer by means of the device or equipment diagrammed in Fig. 3. Said equipment comprises a reader-codifier 30 for the card 22, a control unit 32 connected by means of line 36 with the issuer information system, e.g. the bank, to register the data of the transaction (date, customer, agency, size of the credit document), a scanner 38 with window 40 for application of the finger or fingers of the customer and taking of the fingerprints, and commercial printer 42 having graphic modes and preferably external to the device and advantageously equipped with an automatic feeder for supply of the strip 12 forming the paper support 10 to be customised.

The customisation of the credit document as mentioned above leads to a safety coding defined by a dot code applied in the fields 14, 16 of the paper support 12.

The coding is subject to validation of the fingerprint or fingerprints of the applicant who places his finger or fingers opposite the window 40 of the scanner 38.

Only after verification of the agreement between the mathematical parameters of the fingerprint memorised and those of the finger placed in the window 40 is read the identification code of the customer, used as a cryptographic key for the univocal generation of the safety code to be placed in the fields 14, 16 of the document requested by the customer in accordance with the above described procedures.

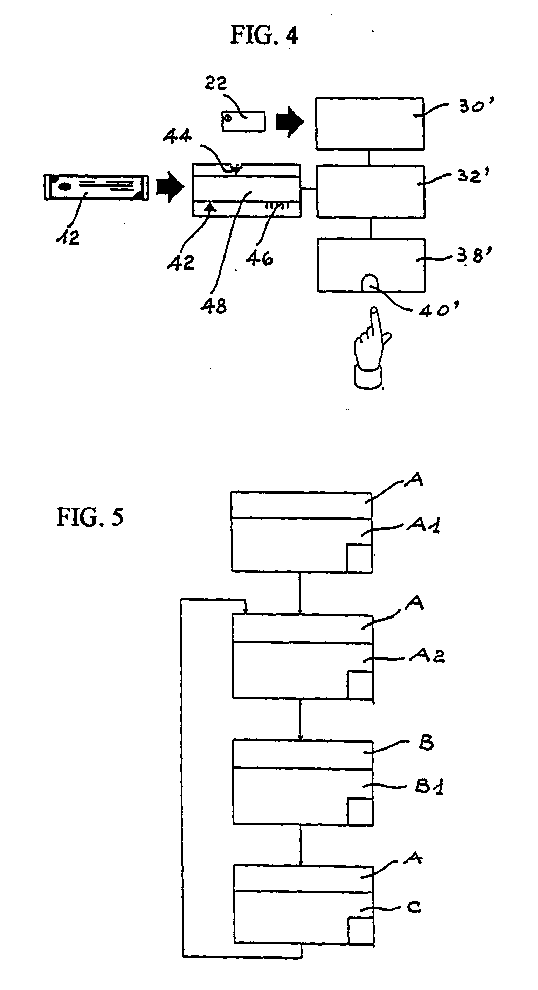

A device designed for validation of the credit document at the sales points is diagrammed in Fig. 4 and calls for in addition to the components defined above and prerogative of the issuing equipment the customised document, a verifier 48 for reading of the dot code or codes 14 and/or 16 of the paper support 12, a micrometric sensor 44 designed for measurement of the print relief achieved along prearranged points of the support and a perforation head 46 which performs cancellation of the credit document.

Creation of the latter in different sizes, subject to the provision of the card incorporating the identification codes of the customer and that of the fingerprint is performed by the following procedure by means of the corresponding equipment or devices. The customer who requests of the bank or analogous institute issuance of the credit document which is the object of the present invention first applies his finger, or optionally several fingers in sequence, in the seat created on the device for issuance of the card, diagrammed in Fig. 2. The fingerprint or fingerprints are taken and memorised in algorithm form in the microchip of the card 22 without creation of archives of the configuration of the fingerprint. Through the communication line 26 the bank system records the operation which gives rise to the issuance of the card and supplies the individual identification code consisting of the alphanumerical sequence, also memorised in said support. The next step concerns issuance of the customised document or documents, performed by the device of Fig. 3 which, after insertion of the card 22 and application of the finger in the window 40 of the scanner 38, takes and compares the fingerprint and prints, preferably with indelible ink, the dotted safety coding.

After said operations the customer has available the univocally customised card and the requested credit documents, spendable in the various approved sales points. Upon using said documents the customer, to give suitable guarantees, places his finger or fingers in the window 40' of the scanner 38', with which is equipped the device for validation shown in

fig. 4, installed at the sales points. Comparison is performed between the picture taken by the scanner 38' and the alternatives memorised in the microchip of the card 22 inserted in the reader 30' of the above device. In case of positive matching there is read the identification code of the customer with the intervention of the linear sensors 42 and micrometric sensor 44.

The sensor 42 reads the dotted code of the credit document, verifying the correctness of the data and ascertaining consequently the univocal matching of the credit document with the card of the bearer. The micrometric sensor 44 measures the relief of the with copper-plate engraving print in some points of the credit document to ascertain the validity of the support. After performing these checks, the perforation head 46 cancels the credit document per by means of perforation which defines the current account number of the subject who receives the credit document.

The flow of the payment system performable by the credit document which is the object of the present invention is diagrammed in Fig. 5 in which are shown the various phases. The issuing organisation A provides in the first place, with a device A1, for issuance of the personal card. Said organisation, with the device A2, then issues the credit documents requested by the custumer. At the payment point, indicated by B, the device or equipment B1 validates to credit document. The latter then returns to the issuing organisation A for actual collection C which completes the cycle.

In the hypothesis relating to the traditional credit card, the microchip which is provided into the card allows performing memorisation of one or more fingerprints of the owner. Equipment basically identical with that of the card 22, connected to the paper support 10, permits provision of said memorisation and subsequent reading or taking of the fingerprint or prints for validation of the credit card. The customisation of the latter can involve or not also the memorisation in the microchip of an individual code of the type provided for the card 22.

The customisation credit card is preferably used independently to perform normal payments but can optionally replace the card 22 for the request and validation of the credit document 10. As may be seen from the foregoing the advantages of the present invention are clear.

The credit document which is the object of the present invention connected to the customisation card provides absolutely safe guarantees since it is unusable by any one different from the owner to whom it is issued. The receiver, in addition, has the certainty of the authenticity and goodness of the credit document which can be considered cash.

The equipment or device provided for issuance of the card or credit document as well as that of validation, allows performance of all the operations of forming and checking of the supports in short times, excluding every risk of taking.

Particularly advantageously is the capability of taking several fingerprints of the customers finger and coding them in a mathematical expression. One of them can optionally be memorised in the form of an alarm signal blocking the transaction, e.g. in the case where the customer is forced to use despite himself a credit document.

Another advantage is the capability of customising traditional credit cards by means of memorisation of one or more fingerprints of the owner, transcodified in a microchip integrated in the card. The latter consequently cannot be used by a person different from the owner. At the sales points, the receiver can verify easily the agreement of the fingerprint of the customer with that or those memorised in the microchip of the credit card shown.

The invention as described above and claimed below can have numerous modifications and variations all falling within the scope of the appended claims.

It is intended to be possibile in particular optional alternative reversals of structure or displacements of component parts which as a whole form the equipment for formation and management of the credit documents which are the object of the present invention and alternative, formal or structural configurations of the credit documents.

## Claims

1. A credit document (10) connectable to a customised document or card (22) or independent customised credit card including a microchip, said credit document (10) comprising a watermarked paper support (12) with copper-plate engraving print provided with a biometric code related to a fingerprint of one or more fingers of a regular owner of the credit document, characterised in that the credit document (10) is provided with at the least one safety code referred to the transaction data and expressed in two fields (14, 16) on the basis of a key consisting of an individual (personal) identification code, and in that the microchip of the customised document or card (22) or independent customised credit card is provided with the personal identification code in form of an alphanumeric sequence and with at least one mathematical expression which transcodifies parameters associated with the fingerprint or fingerprints on the credit document.

2. The credit document according to claim 1, wherein the safety codes are expressed in linear dotted form.

3. The credit document according to claim 1, wherein the safety codes are expressed in cryptographic form.

4. The credit document according to anyone of the preceding claims, wherein the identification code is generated by a issuers information system and consists of an alphanumerical sequence.

5. The credit document according to anyone of the preceding claims, wherein the safety codes are applied by indelible ink on the watermarked paper support (12) further provided with at least one copper-plate engraving print reliefs.

6. An equipment for issuance of customised document or card (22) including a microchip and connectable to the credit document (10) of claim 1, comprising a reader-codifier (20) for said card and a scanner (28) with seat (28') for taking on one or more fingerprints, characterized in that said equipment comprises a further control unit (24) connected to the issuers information system from which it receives a personal identification code, the identification code and the fingerprints, after transcodification, being memorised in the microchip; and the taking of the fingerprint(s) being performed along a number of dots comprised between 150,000 and 250,000 units.

7. An equipment for issuance of the credit document (10) of claim 1, comprising a reader-codifier (20) connectable to the customised document or card (22), a scanner (38) with window (40) for taking of the fingerprint(s), and a printer (42), characterized in that it further comprises a control unit (32) connected to the issuers information system for the personal identification code.

8. An equipment for validation of the credit document (10) connectable to the customised document or card (22) or for validation of the credit card, comprising a reader-codifier (30'), a control unit (32'), a scanner (38') with window (40') for taking the fingerprint or fingerprints of the owner of the credit document (10) or credit card, characterized in that said equipment further comprises a verifier (48) with a linear optical sensor (42) for reading the code or codes of the fields (14, 16) of the watermarked paper support (12) and a micrometric sensor (44) for measurement of the copper-plate engraving print reliefs present on the support.

9. An equipment for validation of the credit document (10) according to claim 8, characterized in that it comprises a reader codifier (30), a control unit (32), a scanner (38) with window (40') for taking the fingerprinter or fingerprints of the owner of the credit document (10) and a printer (42) for issuance of the credit document (10) in combination with a verifier (48) and associated sensors (42, 44) for validation of the credit document.

10. A customised document or credit card (22) including a microchip, characterized in that the microchip is provided with a personal identification code in form of an alphanumeric sequence and with at least one mathematical expression which trascodifies the parameters associated with the fingerprint or fingerprints of one or more fingers of the owner.

## Patentansprüche

1. Kreditdokument (10), das mit einem kundenspezifizierten Dokument oder einer kundenspezifizierten Karte (22) oder einer unabhängigen kundenspezifizierten Kreditkarte verbindbar ist, mit einem Mikrochip, wobei das Kreditdokument einen wassermarkierten Papierträger (12) mit Kupferplatten-Gravurdruck umfaßt, der mit einem biometrischen Code betreffend einen Fingerabdruck von einem oder mehreren Fingern eines berechtigten Eigners des Kreditdokuments versehen ist, dadurch gekennzeichnet, daß das Kreditdokument (10) mit zumindest einem Sicherheitscode betreffend die Transaktionsdaten und ausgedrückt in zwei Feldern (14, 16) auf Grundlage eines Schlüssels versehen ist, der aus einem individuellen (persönlichen) Identifikationscode besteht, und daß der Mikrochip des kundenspezifizierten Dokuments oder der kundenspezifizierten Karte (22) oder der unabhängigen kundenspezifizierten Kreditkarte mit dem persönlichen Identifikationscode in Form einer alphanumerischen Sequenz und mit zumindest einem mathematischen Ausdruck versehen ist, welcher dem Fingerabdruck oder den Fingerabdrücken auf dem Kreditdokument zugeordnete Parameter transkodifiziert.

2. Kreditdokument nach Anspruch 1, wobei die Sicherheitscodes in linearer punktierter Form ausgedrückt sind.

3. Kreditdokument nach Anspruch 1, wobei die Sicherheitscodes in kryptographischer Form ausgedrückt sind.

4. Kreditdokument nach einem der vorangehenden Ansprüche, wobei der Identifikationscode durch ein Ausgeber-Informationssystem erzeugt ist und aus einer alphanumerischen Sequenz besteht.

5. Kreditdokument nach einem der vorangehenden Ansprüche, wobei die Sicherheitscodes mittels dokumentenechter Tinte auf dem wassermarkierten Papierträger (12) aufgetragen sind, der außerdem mit zumindest einem Kupferplatten-Gravurdruckrelief versehen ist.

6. Anlage zum Ausgeben eines kundenspezifizierten Dokuments oder einer kundenspezifizierten Karte (22), das bzw. die einen Mikrochip umfaßt und mit dem Kreditdokument (10) verbindbar ist, nach Anspruch 1, aufweisend einen LeserKodifizierer (20) für die Karte und einen Abtaster (28) mit einem Sitz (28') zum Aufnehmen von einem oder mehreren Fingerabdrücken, dadurch gekennzeichnet, daß die Anlage eine zusätzliche Steuereinheit (24) umfaßt, die mit dem Ausgeber-Informationssystem verbunden ist, von welchem sie einen persönlichen Identifikationscode empfängt, wobei der Identifikationscode und die Fingerabdrücke nach der Transkodifikation in dem Mikrochip gespeichert werden, wobei das Nehmen des Fingerabdrucks bzw. der Fingerabdrücke entlang einer Anzahl von Punkten durchgeführt wird, die zwischen 150.000 und 250.000 Einheiten aufweist.

7. Anlage zum Ausgeben des Kreditdokuments (10) nach Anspruch 1, aufweisend einen Leserkodifizierer (20), der mit dem kundenspezifizierten Dokument oder der kundenspezifizierten Karte (22) verbindbar ist, einen Abtaster (38) mit einem Fenster (40) zum Nehmen des Fingerabdrucks bzw. der Fingerabdrücke, und einen Drucker (42), dadurch gekennzeichnet, daß sie außerdem eine Steuereinheit (32) umfaßt, die mit dem Ausgeber-Informationssystem für den persönlichen Identifikationscode verbunden ist.

8. Anlage zum Gültigmachen des Kreditdokuments (10), das mit dem kundenspezifizierten Dokument oder der kundenspezifizierten Karte (22) verbindbar ist, oder zum Gültigmachen der Kreditkarte, aufweisend einen Leserkodifizierer (30'), eine Steuereinheit (32'), einen Abtaster (38') mit Fenster (40') zum Nehmen des Fingerabdrucks oder der Fingerabdrücke des Eigners des Kreditdokuments (10) oder der Kreditkarte, dadurch gekennzeichnet, daß die Anlage außerdem einen Verifizierer (48) mit einem linearen optischen Sensor (42) zum Lesen des Codes oder der Codes der Felder (14, 16) des wassermarkierten Papierträgers (12) und einen Mikromeßsensor (44) zum Messen des Kupferplatten-Gravurdruckreliefs aufweist, das auf dem Träger vorliegt.

9. Anlage zum Gültigmachen des Kreditdokuments (10) nach Anspruch 8, dadurch gekennzeichnet, daß sie einen Leserkodifizierer (30), eine Steuereinheit (32), einen Abtaster (38) mit Fenster (40) zum Nehmen des Fingerabdrucks oder der Fingerabdrücke des Eigners des Kreditdokuments (10) und einen Drucker (42) zum Ausgeben des Kreditdokuments (10) in Kombination mit einem Verifizierer (48) und zugeordneten Sensoren (42, 44) zum Gültigmachen des Kreditdokuments aufweist.

10. Kundenspezifiziertes Dokument oder kundenspezifizierte Kreditkarte (22) mit einem Mikrochip, dadurch gekennzeichnet, daß der Mikrochip mit einem persönlichen Identifikationscode in Form einer alphanumerischen Sequenz und mit zumindest einem mathematischen Ausdruck versehen ist, welcher die dem Fingerabdruck oder den Fingerabdrücken von einem oder mehreren Fingern des Eigners zugeordnete Parameter transkodifiziert.

## Revendications

1. Document de paiement (10) pouvant être attaché à un document ou une carte personnalisé (22) ou une carte de paiement personnalisée indépendante comprenant une micropuce, ledit document de paiement (10) comprenant un support en papier filigrané (12) avec une empreinte gravée sur une plaque de cuivre pourvue d'un code biométrique apparenté à l'empreinte digitale d'un ou de plusieurs doigts d'un possesseur normal du document de paiement, le document de paiement (10) étant caractérisé en ce qu'il est pourvu d'au moins un code de sécurité se référant aux données de transaction et exprimé dans deux champs (14, 16) selon une clé consistant en un code d'identification individuel (personnel), et en ce que la micropuce du document ou de la carte personnalisé (22) ou de la carte de paiement personnalisée indépendante est pourvue d'un code d'identification personnel, se présentant sous la forme d'une séquence alphanumérique, et d'au moins une expression mathématique qui transcode des paramètres associés à l'empreinte digitale ou aux empreintes digitales se trouvant sur le document de paiement.

2. Document de paiement selon la revendication 1, dans lequel les codes de sécurité sont exprimés sous la forme de pointillés linéaires.

3. Document de paiement selon la revendication 1, dans lequel les codes de sécurité sont exprimés sous une forme cryptographique.

4. Document de paiement selon l'une quelconque des revendications précédentes, dans lequel le code d'identification est généré par un système d'information d'émetteur et consiste en une séquence alphanumérique.

5. Document de paiement selon l'une quelconque des revendications précédentes, dans lequel les codes de sécurite sont appliqués au moyen d'une encre indélébile sur le support en papier filigrané (12) pourvu en outre d'au moins une empreinte gravée en relief sur une plaque de cuivre.

6. Equipement servant à l'émission d'un document ou d'une carte personnalisé (22) comprenant une micropuce et pouvant être attaché au document de paiement (10) de la revendication 1, comprenant un lecteur-codificateur (20) pour ladite carte, et un scanner (28) présentant un emplacement (28') qui sert à la prise d'une ou de plusieurs empreintes digitales, ledit équipement étant caractérisé en ce qu'il comprend une autre unité de commande (24) raccordée au système d'information d'émetteur, duquel il reçoit un code d'identification personnel, le code d'identification et les empreintes digitales étant, après transcodification, mémorisés dans la micropuce ; et la prise de la ou des empreintes digitales étant réalisée le long d'un certain nombre de pointillés compris entre 150 000 et 250 000 unités.

7. Equipement servant à l'émission du document de paiement (10) de la revendication 1, comprenant un lecteur-codificateur (20) pouvant être attaché au document ou à la carte personnalisé (22), un scanner (38) possédant une fenêtre (40) qui sert à la prise de la ou des empreintes digitales, et un dispositif d'impression (42), caractérisé en ce qu'il comprend en outre une unité de commande (32) raccordée au système d'information d'émetteur pour le code d'identification personnel.

8. Equipement servant à la validation du document de paiement (10) pouvant être attaché au document ou à la carte personnalisé (22) ou à la validation de la carte de paiement, comprenant un lecteur-codificateur (30'), une unité de commande (32'), un scanner (38) avec une fenêtre (40') servant à la prise de la ou des empreintes digitales du possesseur du document de paiement (10) ou de la carte de paiement, l'équipement étant caractérisé en ce qu'il comprend en outre un vérificateur (48) possédant un capteur optique linéaire (42) pour lire le ou les codes des champs (14, 16) du support en papier filigrané (12) et un capteur micrométrique (44) pour mesurer l'empreinte gravée en relief sur une plaque de cuivre se trouvant sur le support.

9. Equipement servant à la validation du document de paiement (10) selon la revendication 8, caractérisé en ce qu'il comprend un lecteur-codificateur (30), une unité de commande (32), un scanner (38) possédant une femme (40') qui sert à la prise de la ou des empreintes digitales du possesseur du document de paiement (10), et un dispositif d'impression (42) qui servent à l'émission du document de paiement (10) en combinaison avec un vérificateur (48) et des capteurs associés (42, 44) qui servent à la validation du document de paiement.

10. Document ou carte de paiement personnalisé (22) contenant une micropuce, caractérisé en ce que la micropuce est pourvue d'un code d'identification personnel, se présentant sous la forme d'une séquence alphanumérique, et d'au moins une expression mathématique qui transcodifie les paramètres associés à l'empreinte digitale ou aux empreintes digitales d'un ou de plusieurs doigts du possesseur.
